Europäisches Patentamt

European Patent Office

Office européen des brevets

(19)

(11) EP 0 778 590 A2

(12) EUROPEAN PATENT APPLICATION

(43) Date of publication:
11.06.1997 Bulletin 1997/24

(51) Int. Cl.⁶: **H01B 11/18**

(21) Application number: 96308610.3

(22) Date of filing: 28.11.1996

(84) Designated Contracting States:
DE ES FR GB IT NL SE

(30) Priority: 06.12.1995 US 569409

(71) Applicant: **W.L. GORE & ASSOCIATES, INC.**
**Newark, Delaware 19714 (US)**

(72) Inventors:
• **Hardy, Douglas Alan**
**Newark, Delaware 19711 (US)**
• **Shaller, Russel Richard**
**Landenberg, Pennsylvania 19350 (US)**

(74) Representative: **McCallum, William Potter et al**
**Cruikshank & Fairweather**
**19 Royal Exchange Square**
**Glasgow G1 3AE Scotland (GB)**

(54) **Improvements in or relating to a signal transmission assembly**

(57)    An improved signal transmission assembly is provided having at least one conductive element which is comprised of at least in part of a shape memory alloy. The improved signal transmission assembly of the present invention incorporates many of the desirable features of semi-rigid and flexible signal transmission assembly designs, and eliminates many of the shortcomings associated therewith.

## Description

This invention generally relates to an improved signal transmission assembly, such as, but not limited to, a coaxial cable assembly, for example, which employs at least one shape memory element.

Signal transmission assemblies, such as coaxial cable and waveguide assemblies, are often utilized to transmit high frequency electromagnetic waves between electronic systems. Various signal transmission assembly designs have been employed to optimize the properties (e.g. transmission loss, flexibility, bandwidth, etc.) of such assemblies. All such designs must satisfy Maxwell's equations for transverse electric (TE), transverse magnetic (TM), or transverse electro-magnetic (TEM) propagation. For real systems with boundary conditions, optimization of loss requires at least two considerations, namely, a highly conductive (typically, copper or silver), smooth surface that is free of discontinuities and distortion; and a characteristic impedance of the system (e.g. 50 ohms) that must be maintained within close dimensional tolerances. Any deviation from the foregoing increases transmission loss.

For transmission systems which operate above approximately 10 MHz, virtually all conduction takes place at the surface of the conductor. In this regard, field amplitude decays exponentially from its surface value by $e^{-x/\delta}$, where $\delta$ is called the "skin depth", and $x$ is the distance normal to the surface. Skin depth is a function of frequency ($\omega$), material conductivity ($\sigma$), and permeability ($\mu$), such that:

$$\delta = 2/\text{sqrt}(\omega \cdot \sigma \cdot \mu).$$

Thus, for a typical application at 1.0 GHz using a conductive metal, such as copper or silver for example, virtually all conduction takes place within the first 50 microns of the conductor surface. Since the signal transmission only occurs in this thin outer surface layer of the conductor, poorly conductive materials may be plated with highly conductive materials to achieve good signal transmission. Also, for microwave applications, it is desirable for this outer surface layer to be as smooth as possible.

In coaxial cables, TEM signals are propagated down a transmission line by conduction between two concentric conductive surfaces, namely an inner conductor and an outer conductor For a coaxial cable, the inner conductor is often a conductive metal of a predetermined diameter "d". The inner conductor is often a single wire or a plurality of wires stranded together. The outer conductor is best visualized as a conductive tube having a predetermined inner diameter of "D'". In the past, several designs have been used for the outer conductor, including a solid metal tube, a corrugated metal tube, a braid of metal wires, and a helically wrapped metal foil.

To maintain system impedance for efficient signal transmission, the outer and inner conductors must maintain concentricity relative to one another. This concentricity is accomplished by the use of a dielectric material, which typically is a polymer, ceramic, or polymer/ceramic composite having a low dielectric constant. Some common dielectric materials which have been employed heretofore include solid polytetrafluoroethylene (PTFE), expanded polytetrafluoroethylene (ePTFE), foamed polyethylene (PE), foamed perfluorinated ethylene-propylene (FEP), silicon dioxide or boron nitride.

Conventionally, coaxial cable assemblies may be classified as either semi-rigid or flexible.

In a semi-rigid assembly, the outer conductor is a solid metal tube comprised of copper, titanium, or stainless steel, for example. The inside surface of such a tube may be plated to further enhance electrical performance. Although a semi-rigid design experiences low electromagnetic radiation leakage and low attenuation for a given diameter, and is lightweight and rugged, a semi-rigid coaxial cable is very stiff. Accordingly, installation of semi-rigid assemblies is very difficult, if space is limited, and installation damage to semi-rigid assemblies is not uncommon. To minimize the risk of damage to a semi-rigid cable assembly, special shaping tools are often employed, or the assemblies may be pre-formed prior to installation. Another shortcoming of the semi-rigid design is poor flex life. In this regard, when bent, the material of the outer conductor is plastically deformed. Accordingly, a semi-rigid assembly can only be formed a few times before the inner and outer conductor lose concentricity, or the outer conductor work hardens and fractures or breaks.

In a flexible coaxial cable assembly design, the outer conductor is designed to provide a greater degree of flexibility than a semi-rigid design. Typically, the outer conductor is a metal braid or a helically wrapped metal foil. With either, much less force is required to manipulate the cable assembly into the desired shape for installation. The cable assembly may be reshaped many more times than a semi-rigid assembly. Rather than deforming the outer conductor material as in a semi-rigid design, the elements of the outer conductor of a flexible design are designed to move relative to one another while still maintaining a continuous conductive surface. However, this relative motion of conductive elements may lead to instability in the signal transmission, as well as a greater possibility of electromagnetic radiation leakage. Also, the use of structurally weak elements, such as fine gauge wires or thin metal foil, makes a flexible assembly susceptible to mechanical damage caused by a crushing force to the assembly or exceeding the minimum bend radius of the assembly. Such mechanical damage results in electrical degradation, accordingly, flexible designs often incorporate additional ruggedization to reduce the possibility of mechanical damage. However, additional ruggedization often increases the cable weight and diameter beyond the weight and diameter of a semi-rigid assembly with similar attenuation.

Two alternate type coaxial cable designs provide for the use of either a corrugated metal shell in place of the solid metal outer conductor, or a formable metal overplate, such as an alloy of lead and tin, as part of a wrapped outer conductor. While both of these designs improve flexibility when compared to the semi-rigid design, these alternate designs quickly work harden and break with multiple flexures.

A waveguide assembly operates in a similar fashion as a coaxial cable in that the outer conductor supports an electromagnetic field. However, unlike a coaxial cable, a waveguide does not need a inner conductor or dielectric materials. Instead, the electromagnetic field propagates down the waveguide in one or more modes. These modes are governed by the shape of the waveguide (e.g. circular, elliptical, or rectangular, etc.), the cross-sectional dimensions of the waveguide, and the use frequency.

Also, as with coaxial cable designs, various attempts have been employed to improve the overall flexibility of a waveguide assembly. Conventionally, a majority of waveguide assembly designs employ either corrugated outer tubes or a form of helical wrapping to maintain the waveguide's interior dimensions during bending. Both of these methods suffer from two distinct shortcomings, namely, the inner surface is not smooth which results in increased transmission loss, and both of these methods allow for only minimal bending before the waveguide's interior dimensions are distorted from ideal dimensional ranges, which adds to the transmission loss experienced by the waveguide assembly.

The foregoing illustrates limitations known to exist in present designs of signal transmission assemblies. Thus, it is apparent that it would be advantageous to provide an improved signal transmission assembly design directed to overcoming one or more of the limitations set forth above. Accordingly, a suitable alternative is provided including features more fully disclosed hereinafter.

According to the present invention, there is provided a signal transmission assembly having at least one conductive element which is comprised at least in part of a shape memory alloy.

Preferably, the signal transmission assembly is a coaxial cable having a center conductor comprised at least in part of a shape memory alloy; a dielectric layer disposed about the center conductor; an outer conductor disposed about the dielectric layer; and a polymeric jacket disposed about the outer conductor. The outer conductor may be comprised at least in part of a shape memory alloy, in which case, the outer conductor is tube shaped. An outer protective armor may be disposed about the polymeric jacket, in which case, the outer protective armor may be comprised at least in part of a shape memory alloy.

In another embodiment of the present invention, the signal transmission assembly is a waveguide having at least one conductive element which is comprised at least in part of a shape memory alloy.

According to a further aspect of the present invention, there is provided a method of shielding a signal transmission assembly comprising the following steps:

providing at least one conductive element;
providing an insulating material about the conductive element;
insulating the at least one conductive element with the insulating material;
providing a tube comprised of at least in part a shape memory alloy; and
at least partially enclosing the insulated at least one conductive element within the tube.

This method of shielding may include the additional step of plating at least one surface of the tube with a material selected from copper, gold, silver of rhodium.

It is, therefore, a purpose of the present invention to provide an improved flexible, or semi-rigid, signal transmission assembly.

It is another purpose of the present invention to provide such an improved signal transmission assembly which requires no special tools for forming the assembly into a predetermined shape, and which may be so formed, by hand, without damage to the cable assembly.

It is another purpose of the present invention to provide a signal transmission assembly which is resistant to metal work hardening and damage caused by repetitive flexing.

It is still another purpose of the present invention to provide a signal transmission assembly having a protective metal tube for reducing electromagnetic leakage.

It is yet another purpose of the present invention to provide a signal transmission assembly having a low transmission loss.

It is yet another purpose of the present invention to provide a signal transmission assembly which is lightweight, does not require additional ruggedization to maintain effective signal transmission, and which has a smaller diameter as compared with conventional flexible signal transmission assemblies.

It is still another purpose of the present invention to provide a signal transmission assembly having at least one shape memory element.

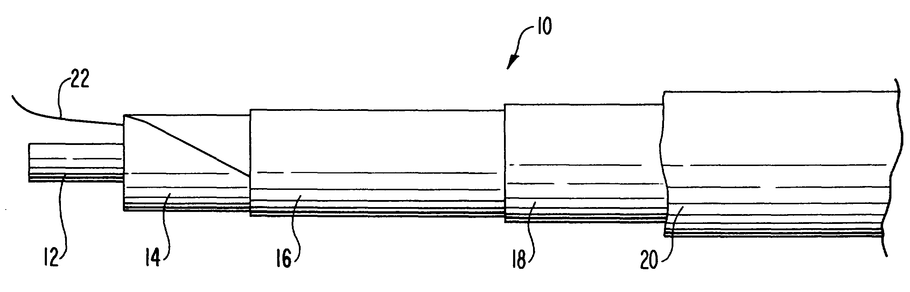

An embodiment of the invention will now be described, by way of example, with reference to the accompanying drawing, in which:-

The Figure is a partial view of one embodiment of the improved signal transmission assembly in accordance with the teachings of the present invention.

Referring now to the drawings, wherein similar reference characters designate corresponding parts throughout the several views, the improved signal transmission assembly of the present invention is generally illustrated at 10 in the Figure.

The improved signal transmission assembly of the present invention incorporates many of the desirable features of semi-rigid and flexible signal transmission assembly designs, and eliminates many of the shortcomings associated therewith.

As illustrated in the Figure, in one embodiment of the present invention, the signal transmission assembly 10 of the present invention is a coaxial cable assembly having at least one element thereof comprised of a shape memory effect alloy (SME). The coaxial cable assembly comprises at least a center or inner conductor 12, a dielectric layer 14, a shield layer 16, and a protective jacket 18. An optional protective sheath or armor 20 is shown which provides electrical shielding, a locking radius, and ruggedization. Additionally, an optional drain wire 22 may be provided. It is anticipated that other coaxial cable configurations may be provided. The foregoing description of one embodiment of a coaxial cable is for purposes of illustration only, and is not intended to limit the scope of the present invention.

As should be understood, either the center conductor 12, the shield layer 16 or the armor 20 may be comprised, at least in part, of a shape memory effect alloy. Also, all of these coaxial cable elements, or any combination thereof, may be comprised of, at least in part, a shape memory effect alloy.

As used herein, shape memory effect alloys shall mean those metals or polymers which, if plastically deformed at one temperature, will recover their original shape on being raised to a predetermined higher temperature, called the transition temperature. The original shape which is "remembered" by the metal upon being heated above the transition temperature is imprinted in the metal by forming the metal into that shape at a temperature far above the transition temperature. As is well known, in certain alloys an intermetallic phase has been found to undergo a displacive, shear-like transformation to martensite when cooled below a critical temperature, referred to $M_S$. On further cooling to a temperature designated as $M_F$ the transformation is complete, and the specimen is said to be in the martensitic state. If deformed in this condition it undergoes a strain which is completely recovered upon heating. This strain recovery or shape memory begins at a temperature $A_S$ and is complete when the specimen reaches a higher temperature designated as $A_F$ at which point the martensite has reverted to the parent phase structure austenite. These critical temperatures $M_S$, $M_F$, $A_S$, and $A_F$ are dependent on the alloy composition and its thermo-mechanical processing. A specimen deformed in the 100% martensite region will recover its original shape when heated above the $A_F$ temperature.

A specimen in the 100 % martensite region is very ductile and may be deformed with very little force. As is well known, this characteristic is attributable to the crystallographic structure of martensite which may be deformed with very little stress. For a given strain, the stress required to deform the martensitic phase of a shape memory effect alloy is much lower than the stress required for most common metals (e.g. copper, aluminum, titanium, etc.). In a semi-rigid coaxial cable or waveguide design, this characteristic of shape memory effect alloys may be utilized to greatly enhance assembly flexibility in comparison to the assembly flexibility that common metals allow.

If a stress is applied to a shape memory alloy in the temperature range between $A_F$ and a maximum temperature (Md), martensite can be stress-induced. Less energy is needed to stress-induce martensite than to deform the austenite by conventional mechanisms. Up to 10% strain can be accommodated by this process. As austenite is the thermodynamically stable phase at this temperature under no-load conditions, the material springs back into its original shape when the stress is no longer applied. This elasticity is also called pseudoelasticity or transformational superelasticity. This characteristic of shape memory effect alloys allows the design of coaxial cable or waveguide assemblies not otherwise possible, specifically, a signal transmission assembly which may be deformed up to 10 % strain, but which will return to its original shape when the force is removed.

It becomes increasingly difficult to stress-induce martensite at increasing temperatures above $A_F$. Eventually, it is easier to deform the material by conventional mechanisms than by inducing and deforming martensite. The temperature at which martensite is no longer stress-induced is called (Md). Above Md, the alloys are deformed like ordinary materials, Thus, superelasticity is only observed over a narrow temperature range on the order of 60°C.

To "train" a SME alloy coaxial cable element to remember a particular shape configuration, the element is first heated to a high temperature sufficient to anneal the element, typically 500°C to 800°C. While held at this temperature, the part is mechanically stressed by external clamping or similar means to produce a desired shape. During this operation, the metal assumes what is called the parent or beta phase. The part is subsequently cooled to a temperature at which the internal structure of the metal is transformed into an orderly crystalline state referred to as a quench induced martensitic state. $M_S$, and finishes at a lower temperature $M_F$. These temperatures vary as a function of alloy composition. $M_S$ is reported to vary between -55°C to +110°C for NI-TI binary alloys, -180°C to +200°C for CU-ZN-AL, and -140°C to +100°C for CU-NI-AL ternaries.

After the element has been trained as described above, the element can be mechanically stressed inelastically to a deformed state having substantial residual strain. If the element is now heated to a temperature referred to as $A_S$, the internal crystal structure begins to change from martensitic to austenitic, a process which is complete at a higher temperature $A_F$. During this process, the element recovers its original "trained" shape, and may exert a substantial force in doing so. $A_S$ is above $M_S$, and the range between $A_S$ and $A_F$ is typically 20 to 30 degrees centigrade. The temperature range between $A_S$ and $A_F$ may be defined as a memory recovery range. Typically, this range is about 20°C, although it has been reported to be as low as 6°C and as high at 80°C for certain alloy compositions.

The training process described above produces what is referred to as a one-way memory effect. SME elements having a two-way memory effect are also useful. In an SME alloy element having a two-way memory, the element transforms into its initially imprinted shape when its temperature is raised to $A_F$. Additionally, however, the element transforms into a second memory shape when cooled below $M_S$.

To imprint a two-way memory on an SME alloy element, the first memory shape is imprinted on the element exactly as has been described above for the one-way training process. The element is then cooled below $M_S$, mechanically stressed to a second memory state, producing what is referred to as a stress induced martensitic transformation. The part is then heated to its austenitic transition temperature ($A_S$ to $A_F$), at which time is assumes its first memory shape. Next, the part is cooled below $M_S$ while being stressed to conform to the second memory shape. This process is then cyclically repeated until memory of the second shape has been imprinted on the element. When imprinted with two-way memory, the element will assume the first memory shape when heated above the transition temperature of the alloy, and assume the second memory shape when cooled below the transition temperature.

The one-way and two-way memory effects allow the design of coaxial cable or waveguide assemblies not otherwise possible, specifically, a signal transmission assembly which may be deformed at a low temperature, but which will return to its original shape when the temperature is raised above the transition temperature.

Shape memory effect alloys which are suitable for use in the improved signal transmission assembly of the present invention include, but are not limited to, those alloys which are listed in the table which is provided hereinafter.

| ALLOY | $M_S$ RANGE (° C) | COMPOSITION (atomic % except as noted) |
|---|---|---|
| Cu-Al-Ni | -140 to 100 | 14 % to 14.5 % Al by weight |
| | | 3 % to 4.5 % Ni by weight |
| Cu-Sn | -120 to 30 | 15 % Sn |
| Cu-Zn | -180 to -10 | 38.5 % to 41.5 % Zn by weight |
| Cu-Zn-X (X = Si, Sn, Al) | -180 to 200 | 0 % to 5 % X by weight |
| Mn-Cu | -250 to 180 | 5 % to 35 % Cu |
| Fe-Mn-Si | -200 to 150 | 32 % Mn by weight |
| | | 6 % Si by weight |
| In-Ti | 60 to 100 | 18 % to 23 % Ti |
| Ni-Al | -180 to 100 | 36 % to 38 % Al |
| Ni-Ti | -50 to 110 | 49 % to 51 % Ni |
| Fe-Pt | -130 | 25 % Pt |
| Ag-Cd | -190 to -50 | 44 % to 49 % Cd |
| Au-Cd | 30 to 100 | 46.5 % to 50 % Cd |

As stated hereinabove, the improved signal transmission assembly of the present invention includes at least one element comprised of a shape memory effect alloy. In the case of the coaxial cable assembly, any combination, or all, of the center conductor 12, the shield layer 16, or the armor 20 may be comprised of a shape memory effect alloy.

The center conductor 12 comprises a single wire or wires stranded together. The diameter of the single wire or wire strand is commonly in the range of from about 0.010" to about 0.140". The center conductor may be comprised of copper, copper clad aluminum, copper clad steel, or aluminum. The center conductor 12 may also be comprised of a shape memory effect alloy wire or stranded wires. Because nearly all conduction occurs on the surface of the metal above 10 MHz, the surface of a center conductor comprised of a shape memory effect alloy may be plated with a highly conductive material to lower transmission loss. For instance, suitable plating materials would include silver, copper, gold, or rhodium. The thickness of the plated metal varies with the use frequency and the conductivity of the plated metal, but is commonly in the range of from about 5 to 25 microns.

The dielectric layer 14 comprises a material appropriately selected as an insulating material for electric wires.

Examples include, but are not limited to polyethylene, foamed polyethylene, and foamed perfluorinated ethylenepropylene (FEP), silicone dioxide, boron nitride, polyvinyl chloride, polyamides, polytetrafluoroethylene (PTFE), porous expanded PTFE, tetrafluoroethyleneperfluoroalkylvinyl ether copolymers (PFA), tetrafluoroethylenehexfluoropropylene copolymers (FEP), tetrafluoroethylene-ethylene copolymers (ETFE), polyvinylidene fluoride(PVF), polyimides, polyether ether ketones (PEEK), silicone resins, foamed materials obtained from these materials, paper, ceramics, elastomers (rubber materials), or other suitable insulating materials.

As the term is used herein, porous expanded polytetrafluoroethylene (PTFE) shall mean a membrane which may be prepared by any number of known processes, for example, by stretching or drawing processes, by papermaking processes, by processes in which filler materials are incorporated with the PTFE resin and which are subsequently removed to leave a porous structure, or by powder sintering processes. Preferably, the porous polytetrafluoroethylene film is porous expanded polytetrafluoroethylene film having a microstructure of interconnected nodes and fibrils, as described in U.S. Patent Nos. 3,953,566 and 4,187,390, which are incorporated herein by reference, and which fully describe the preferred material and processes for making them. The porous polytetrafluoroethylene membrane may have a pore volume in a range from about 20 to about 98 percent.

The shield layer 16 may be defined by a braided or served configuration of conventional conductors. However, the shield layer 16 may also be defined by a cylindrical metal tube having an inner diameter d and outer diameter D. Thus, the wall thickness of the tube is (D - d)/2 . The outer diameter D is typically in the range of from about 0.020" to about 0.300". For mechanical integrity and ruggedness, the tubing wall thickness may increase as the tubing outer diameter increases. Across the cited tube diameter range, the wall thickness may range from 0.002" to 0.030". The tube may be shaped to have a circular cross section, as is effective for a coaxial cable. Also, the tube may be defined by a non-circular shape, such as a elliptical or rectangular shape, which may be effective in a waveguide design. Because nearly all conduction occurs on the inside surface of the metal above 10 MHz, the surface of the tube may be plated with a highly conductive material to lower transmission loss. For instance, suitable plating materials would include silver, copper, gold, or rhodium. The thickness of the plated metal varies with the use frequency and the conductivity of the plated metal but is commonly in the range of 5 to 25 microns.

The shield layer 16 is wrapped or extruded with a protective jacket 18 which is impermeable to water and other contaminants and which is resistant to abrasions. Suitable materials for the protective jacket include, but are not limited to, polyvinyl chloride, chlorinated elastomers and other rubbers, polyurethanes, or fluoropolymers, for example.

The protective sheath or armor 20 comprises a cylindrical metal tube having inner diameter d and outer diameter D. Thus, the wall thickness of the tube is (D - d)/2 . The outer diameter D is typically in the range of from about 0.020" to about 0.300". For mechanical integrity and ruggedness, the tubing wall thickness generally increases as the tubing outer diameter increases. Across the cited tube diameter range, the wall thickness may range from 0.002" to 0.030". The armor may be circular, rectangular, or elliptical depending on the geometry of the shield layer 16. In one use, the armor provides shielding of electromagnetic radiation. To increase shielding effectiveness, the armor may be plated with a highly conductive material. For example, suitable plating materials would include silver, copper, gold, or rhodium. The thickness of the plated metal varies with the use frequency, the conductivity of the plated metal, and the shielding effectiveness desired, but is commonly in the range of from about 5 to about 100 microns.

## Claims

1. A signal transmission assembly having at least one conductive element which is comprised at least in part of a shape memory alloy.

2. An assembly as claimed in claim 1, wherein the signal transmission assembly is a coaxial cable.

3. An assembly as claimed in claim 2, wherein the at least one conductive element which is comprised at least in part of a shape memory alloy is a center conductor of the coaxial cable.

4. An assembly as claimed in claim 2 or 3, wherein the at least one conductive element which is comprised at least in part of a shape memory alloy is an outer conductor of the coaxial cable.

5. An assembly as claimed in any of claims 2 to 4, wherein the coaxial cable includes an outer protective armor which is comprised at least in part of a shape memory alloy.

6. An assembly as claimed in claim 2, in which the coaxial cable comprises a center conductor comprised at least in part of a shape memory alloy;

   a dielectric layer disposed about the center conductor;
   an outer conductor disposed about the dielectric layer; and

a polymeric jacket disposed about the outer conductor.

7. An assembly as claimed in claim 6, wherein the outer conductor is comprised at least in part of a shape memory alloy.

8. An assembly as claimed in claim 6 or 7, wherein the coaxial cable includes an outer protective armor disposed about the polymeric jacket, the outer protective armor being comprised at least in part of a shape memory alloy.

9. An assembly as claimed in claim 2, comprising:

a center conductor;
a dielectric layer disposed about the center conductor;
an outer conductor comprised of a tube which is defined at least in part of a shape memory alloy; and
a polymeric jacket disposed about the outer conductor.

10. An assembly as claimed in claim 9, wherein the center conductor is comprised at least in part of a shape memory alloy.

11. An assembly as claimed in claim 9 or 10, wherein the coaxial cable includes an outer protective armor disposed about the polymeric jacket, the outer protective armor being comprised at least in part of a shape memory alloy.

12. An assembly as claimed in claim 2, comprising:

a center conductor comprised at least in part of a shape memory alloy;
a dielectric layer disposed about the center conductor;
an outer conductor comprised of a tube which is defined at least in part of a shape memory alloy; and
a polymeric jacket disposed about the outer conductor.

13. An assembly as claimed in claim 12, wherein the coaxial cable includes an outer protective armor disposed about the polymeric jacket, the outer protective armor being comprised at least in part of a shape memory alloy.

14. An assembly as claimed in claim 1 in which the signal transmission assembly is a waveguide.

15. A method of shielding a signal transmission assembly, the method comprising the following steps:

providing at least one conductive element;
providing an insulating material about the conductive element;
insulating the at least one conductive element with the insulating material;
providing a tube comprised of at least in part a shape memory alloy; and
at least partially enclosing the insulated at least one conductive element within the tube.

16. A method as claimed in claim 15 including the additional step of plating at least one surface of the tube with a material selected from copper, gold, silver or rhodium.